# EUROPÄISCHE PATENTSCHRIFT

(11) **EP 0 982 275 B1**
(45) Veröffentlichungstag und Bekanntmachung des Hinweises auf die Patenterteilung: **04.12.2002**
(21) Anmeldenummer: 99109006.9
(22) Anmeldetag: 06.05.1999
(51) Int. Cl.: C04B 28/20

(54) **Anwendung eines Kalksandsteinmaterials als temperaturfester Werkstoff**
Utilisation of a sand-lime material as a temperature resistant material
Utilisation de matériau silicio-calcaire comme matériau résistant à la temperature

(30) Priorität: 28.08.1998 DE 19839213
(43) Veröffentlichungstag der Anmeldung: 01.03.2000
(73) Patentinhaber: Liapor GmbH & Co. KG, 91352 Hallerndorf (DE); Kalksandstein-Werk Wemding GmbH, 86650 Wemding (DE)
(72) Erfinder: Burtscher, Wolfgang, 86650 Wemding (DE); Hennek, Paul, 91301 Forchheim (DE)
(74) Vertreter: Böhme, Volker, Dipl.-Ing.

(56) Entgegenhaltungen:
- EP-A- 0 179 268
- DE-A- 4 104 919
- DE-A- 19 737 447
- DE-C- 19 721 205
- US-A- 3 652 310
- DATABASE WPI Section Ch, Week 199531 Derwent Publications Ltd., London, GB; Class A25, AN 1995-240884 XP002170815 & ZA 9 405 548 A (MARKOVIC M), 26. April 1995 (1995-04-26)

## Beschreibung

Die Erfindung betrifft die Anwendung eines Kalksandsteinmaterials, hergestellt aus einer Mischung mit Sand und Kalk und gegebenenfalls Zusätzen und verdichtet zu einer Dichte, als temperaturfester Werkstoff für Temperaturbelastungen ab einer Mindesttemperatur mit einer Restdruckfestigkeit.

Es ist bekannt, einen normalen Kalksandstein als Baumaterial einer Brandschutzwand anzuwenden. Der normale Kalksandstein besteht z.B. aus 88 - 95 Gew.% Quarzsand und 5 - 12 Gew.% Kalk (CaO) und ist verdichtet zu einer Dichte von 1,2 - 2,0 kg/dm³. Brandversuche an KS-Brandwänden haben ergeben, daß bei Temperaturen von über 600°C ein wesentlicher Eingriff in die KS-Struktur erfolgt und zwar durch ein vollständiges Entwässern und Schwinden der CSH-Phasen, wodurch eine Lockerung des Gefüges erfolgt. Es wurden eigene Untersuchungen an verschiedenen KS-Steinen durchgeführt mit folgendem Ergebnis: Bereits bei einer Temperatur von 700°C und einer Dauer von 1 Std. ist die Struktur der Steine so geschädigt, daß das KS-Material zwischen den Fingern zerrieben werden konnte. Der normale Kalksandstein hält also nur Temperaturbelastungen bis 700°C aus, wenn eine wirksame Restdruckfestigkeit verlangt ist.

Es ist auch bekannt (DE 28 32 125 C2) die Anwendung eines Kalksandsteinmaterials als temperaturfestes Baumaterial für Temperaturbelastungen ab 800°C. Dieses Kalksandsteinmaterial weist je nach Zusammensetzung vor der Temperaturbelastung eine Druckfestigkeit von z.B. 1,5 - 11,4 N/mm² auf, so daß die Restdruckfestigkeit nach der Temperaturbelastung recht gering ist. Dieses Kalksandsteinmaterial ist hergestellt mit z.B. 35,5 - 44 Gew.% Kalk und 41 - 56 Gew.% Siliciummaterial-Sand. Es wird relativ viel Kalk benötigt und das Siliciummaterial ist, soweit es nicht Quarzmehl ist, ein Siliciumdioxydmaterial und ein Calciumsilikat, die in der Herstellung relativ aufwendig sind. Die Dichte dieses Kalksandsteinmaterials beträgt je nach Herstellungsart 0,16 oder 0,8 kg/dm³.

Eine Aufgabe der Erfindung ist es nun, eine Anwendung der eingangs genannten Art anzugeben, deren Kalksandsteinmaterial bei Eignung für Temperaturbelastungen ab 700°C aus mengenmäßig weniger Kalk und aus weniger aufwendigem Sand besteht. Die Erfindung besteht in der Anwendung eines Kalksandsteinmaterials, hergestellt aus einer Mischung von 80 - 92 Gew.% Blähtonmaterial umfassend gemahlenen Blähtonsand (0 - 1 mm), 10 - 18 Gew.% Kalk (CaO) und gegebenenfalls Zusätzen und verdichtet zu einer Dichte von 0,7 - 1,3 kg/dm³, als temperaturfester Werkstoff für Temperaturbelastungen ab 800°C mit einer Restdruckfestigkeit von mindestens 15 N/mm².

Bei der erfindungsgemäßen Anwendung weist das Kalksandsteinmaterial bei einer Temperaturbelastung ab 700°C noch die relativ hohe Restdruckfestigkeit von mindestens 15 N/mm² auf, so daß es neuen Anwendungsmöglichkeiten zugeführt werden kann. Das Kalksandsteinmaterial, das angewendet wird, hat einen geringen Kalkanteil und enthält preiswertes bzw. preislich wenig aufwendiges Sandmaterial, wobei gemahlener Blähtonsand auch für viele andere Zwecke erzeugt wird. Das angewendete Kalksandsteinmaterial hat eine Wärmeleitfähigkeit von 0,245 - 0,246 Watt/°K, m². Der gemahlene Blähtonsand (0 - 1 mm) ist relativ grobkörnig und an sich feuerbeständig. Das Kalksandsteinmaterial hat eine geringere Dichte, ist also leichter.

Anwendungen des Kalksandsteinmaterials für Temperaturbelastungen oberhalb 800°C und ab 1.000°C, z.B. ab 1.100°C, sind bevorzugt und können z.B. bei 1.200°C liegen. Die Anwendungen liegen z.B. bei Öfen, thermischen Anlagen oder bei industriellen Brandschutzbauten. Es liegt hier ein temperaturbeständiger Werkstoff vor, der auch in der Gerätetechnik, z.B. wie Schamotte zur Isolierung verwendet wird. Das Kalksandsteinmaterial liegt z.B. in Form von Steinblöcken oder von Steinplatten vor. Das Kalksandsteinmaterial kann auch für Temperaturbelastungen unter 800°C eingesetzt werden, wobei es, z.B. bei einer Brandschutzwand, dünner, d.h. mit geringeren Abmessungen eingesetzt wird. Die Schwindung des Steinmaterials für Temperaturbelastungen ab 800°C ist gering und beträgt z.B. bei 800°C nur 0,8 % der Längenabmessung; es liegt also eine gute Dimensionsstabilität vor. Gemahlener Blähtonsand ist Blähtonsand, der aus Blähton einer Teilchengröße > 1 mm durch Mahlen hergestellt ist. Der Werkstoff ist z.B. ein Baumaterial.

Das erfindungsgemäß angewendete Kalksandsteinmaterial wird in der Regel hergestellt, indem der Kalk, der gemahlene Blähtonsand, ggf. weiteres Blähtonmaterial und die Zusätze trocken gemischt werden und die Trockenmischung dann mit Wasser gemischt wird. Es werden auf 100 Gew.% Trockenmischung 15 - 25 Gew.% (der Trockenmischung) Wasser gegeben. Wenn der Kalk ungelöscht vorliegt, wird mehr Wasser zugemischt; wenn der Kalk gelöscht vorliegt, wird weniger Wasser zugemischt. Die Feuchtmischung wird geformt und verdichtet, z.B. durch Pressen mit einem Preßdruck von 10 N/mm². Das geformte und verdichtete Material läßt man dann aushärten, z.B. im Autoklaven bei ca. 200°C.

Besonders zweckmäßig und vorteilhaft ist es, wenn von den 80 - 92 Gew.% Blähtonmaterial 50 - 92 Gew.% gemahlener Blähtonsand (0 - 1 mm) und 0 - 30 Gew.% grober Blähton (1 - 8 mm) sind. Durch die Zugabe des groben Blähtons wird das Kalksandsteinmaterial leichter, fester und beständiger. Der grobe Blähton ist vorzugsweise 1 - 4 mm im Durchmesser.

Der Blähtonsand (0 - 1 mm) weist eine Kornverteilung über die gesamte Sieblinie auf. In der Regel sind mehr als 50 Gew.% des feinen Sands ≤ 0,25 mm. Der grobe Blähton (1 - 4 mm) weist eine Kornverteilung über die gesamte Sieblinie auf. In der Regel sind mindestens 30 Gew.% ≤ 2 mm. Wichtig ist der SiO₂-Gehalt des Blähtons, der in der Regel mindestens 50 Gew.% und vorzugsweise mindestens 53 Gew.%, z.B. ca. 56 Gew.% des Blähtons ausmacht.

Besonders zweckmäßig und vorteilhaft ist es, wenn das Blähtonmaterial eine Feuchte von maximal 2 Gew.% hat. Der Blähton soll also bei der Herstellung des Kalksandsteinmaterials ofentrocken sein, damit die erwünschten Eigenschaften in verbesserter Weise vorliegen.

Bei einem Ausführungsbeispiel der Erfindung werden Steinblöcke mit Abmessungen von 25 x 11 x 11 cm³ hergestellt aus einer Trokkenmischung von 14 Gew.% Kalk (CaO) und 86 Gew.% gemahlenem Blähtonsand (0 - 1). Zu der Trockenmischung werden 10 Gew.% (bezogen auf die Trockenmischung) an Wasser zugegeben. Die Steinblöcke werden zu Grünlingen geformt und gepreßt und dann bei 200°C im Autoklaven gehärtet, wonach sie eine Dichte von 1,1 - 1,2 kg/dm³ aufweisen. Diese Steinblöcke werden für 4 Std. einer Temperatur von 1.000°C ausgesetzt. Nach der Abkühlung weisen die Steinblöcke folgende Eigenschaften auf:

| | |
|---|---|
| Dichte | 1,1 - 1,2 kg/dm³ |
| Restdruckfestigkeit | 16 N/mm² |
| Schwindung | 10 mm/m bzw. ca. 1% |
| Glühverluste | 4,5 % |

## Patentansprüche

1. Anwendung eines Kalksandsteinmaterials,
hergestellt aus einer Mischung von 80 - 92 Gew.% Blähtonmaterial umfassend gemahlenen Blähtonsand (0 - 1 mm), 10 - 18 Gew.% Kalk (CaO) und gegebenenfalls Zusätzen und verdichtet zu einer Dichte von 0,7 - 1,3 kg/dm³,
als temperaturfester Werkstoff für Temperaturbelastungen ab 700°C mit einer Restdruckfestigkeit von mindestens 15 N/mm².

2. Anwendung nach Anspruch 1, **dadurch gekennzeichnet, daß** von den 80 - 92 Gew.% Blähtonmaterial 50 - 92 Gew.% gemahlener Blähtonsand (0 - 1 mm) und 0 - 30 Gew.% grober Blähton (1 - 8 mm) sind.

3. Anwendung nach Anspruch 1, **dadurch gekennzeichnet, daß** das Blähtonmaterial eine Feuchte von maximal 2 Gew.% hat.

## Claims

1. Use of a sand-lime material, produced from a mixture of 80-92 wt.% expanded clay material comprising ground expanded clay sand (0-1 mm), 10-18 wt.% lime (CaO) and, optionally, additives and compacted to a density of 0.7-1.3 kg/dm³, as a temperature-resistant material for temperature loads of 700°C and above with a residual compressive strength of at least 15 N/mm².

2. Use according to claim 1, **characterised in that**, of the 80-92 wt.% expanded clay material, 50-92 wt.% comprises ground expanded clay sand (0-1 mm) and 0-30 wt.% comprises coarse expanded clay (1-8 mm).

3. Use according to claim 1, **characterised in that** the expanded clay material has a moisture content of at most 2 wt.%.

## Revendications

1. Utilisation d'un matériau silicocalcaire produit à partir d'un mélange de 80-92 % en masse de matériau d'argile expansée comprenant du sable d'argile expansée broyé (0 - 1 mm), 10 - 18 % en masse de chaux (CaO) et éventuellement des additifs et compacté à une masse volumique de 0,7 - 1,3 kg/dm³ comme matériau résistant à la température pour des sollicitations de température à partir de 700°C, avec une résistance à la pression résiduelle d'au moins 15 N/mm².

2. Utilisation selon la revendication 1, **caractérisée en ce que**, parmi les 80 - 92 % en masse de matériau d'argile expansée, 50 - 92 % en masse sont du sable d'argile expansée broyé (0 - 1 mm) et 0 - 30 % en masse sont de l'argile expansée grossière (1 - 8 mm).

3. Utilisation selon la revendication 1, **caractérisée en ce que** le matériau d'argile expansée a une humidité de 2 % en masse au maximum.
